(19) Europäisches Patentamt / European Patent Office / Office européen des brevets

(11) **EP 4 810 851 A1**

(12) **EUROPEAN PATENT APPLICATION**
published in accordance with Art. 153(4) EPC

(43) Date of publication:
**23.09.2026 Bulletin 2026/39**

(21) Application number: **24907809.8**

(22) Date of filing: **19.11.2024**

(51) International Patent Classification (IPC):
***F17C 13/08*** *(2006.01)* ***F17C 13/02*** *(2006.01)*
***G01M 3/24*** *(2006.01)* ***G06Q 50/10*** *(2012.01)*

(52) Cooperative Patent Classification (CPC):
**F17C 13/02; F17C 13/08; G01M 3/24; G06Q 50/10**

(86) International application number:
**PCT/KR2024/018201**

(87) International publication number:
**WO 2025/135524 (26.06.2025 Gazette 2025/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.12.2023 KR 20230186504**
**13.03.2024 KR 20240035217**
**01.05.2024 KR 20240058220**

(71) Applicant: **National Institute of Chemincal Safety**
**Chungcheongbuk-do 28164 (KR)**

(72) Inventors:
- **SHIN, Changhyun**
**Cheongju-si Chungcheongbuk-do 28164 (KR)**
- **LEE, Sunmin**
**Cheongju-si Chungcheongbuk-do 28164 (KR)**
- **HEO, Hwajin**
**Cheongju-si Chungcheongbuk-do 28164 (KR)**
- **HYEON, Hyerim**
**Cheongju-si Chungcheongbuk-do 28164 (KR)**
- **PARK, Pong Gyun**
**Cheongju-si Chungcheongbuk-do 28164 (KR)**

(74) Representative: **Nederlandsch Octrooibureau**
**P.O. Box 29720**
**2502 LS The Hague (NL)**

(54) **GAS SUPPLY SYSTEM**

(57) A gas supply system is provided. The gas supply system includes a gas supply unit for supplying a gas to a production facility. The gas supply unit includes a gas storage container storing the gas, a gas supply pipe connecting the gas storage container and the production facility, a container storage cabinet accommodating and storing the gas storage container, and an ultrasonic detector disposed in the container storage cabinet.

EP 4 810 851 A1

342
343
344
341
200
240
220
230
331
332
312
210
110
320
311
313
300
130
125
120
100
10


Fig. 1

## Description

### Technical Field

The present invention relates to a gas supply system.

### Background Art

Various high-pressure process gases are used in a process of manufacturing a semiconductor device or a display device. Since the process gases are toxic and hazardous chemicals that cause personal injury and environmental pollution upon leakage, facilities for neutralizing the leaked gas are installed and used in industrial sites. However, since such facilities operate even when there is no gas leakage, high process costs are incurred. In addition, when a large amount of gas leaks instantaneously, it may flow backward into an indoor workplace, thereby causing harm to workers, and when the leakage pressure of the gas is low, there is a problem in that the leaked gas is discharged into the atmosphere without being detected.

### Disclosure

### Technical Problem

The present invention provides a gas supply system having good performance.
The other objects of the present invention will be clearly understood by reference to the following detailed description and the accompanying drawings.

### Technical Solution

A gas supply system according to embodiments of the present invention includes a gas supply unit for supplying a gas to a production facility. The gas supply unit includes a gas storage container storing the gas, a gas supply pipe connecting the gas storage container and the production facility, a container storage cabinet accommodating and storing the gas storage container, and an ultrasonic detector disposed in the container storage cabinet.
The ultrasonic detector may be disposed at a connection portion between the gas storage container and the gas supply pipe.
The container storage cabinet may have a through-hole, and the gas supply unit may further include a through-hole opening and closing unit disposed adjacent to the container storage cabinet to open and close the through-hole.
The through-hole opening and closing unit may include a through-hole blocking plate disposed adjacent to the through-hole to open and close the through-hole, a blocking plate driving unit connected to the through-hole blocking plate to drive the through-hole blocking plate, and a blocking plate connection unit connecting the through-hole blocking plate and the blocking plate driving unit.
The through-hole opening and closing unit may be connected to the ultrasonic detector by wire or wirelessly to communicate therewith, and the ultrasonic detector may control an operation of the through-hole opening and closing unit.
The gas supply unit may further include a pressure detector disposed adjacent to the container storage cabinet to detect a pressure inside the container storage cabinet. The through-hole opening and closing unit may be connected to the pressure detector by wire or wirelessly to communicate therewith, and the pressure detector may control an operation of the through-hole opening and closing unit.
The gas supply system may further include a leaked gas detection unit connected to the gas supply unit to detect a gas leaked from the gas supply unit. The leaked gas detection unit may include a leaked gas detector detecting the leaked gas, a leaked gas detection transfer pipe connecting the container storage cabinet and the leaked gas detector, and a leaked gas detection transfer device disposed on the leaked gas detection transfer pipe to transfer the leaked gas.
The gas supply system may further include a leaked gas treatment unit connected to the gas supply unit to treat the leaked gas.
The leaked gas treatment unit may be connected to the ultrasonic detector by wire or wirelessly to communicate therewith, and the ultrasonic detector may control an operation of the leaked gas treatment unit.
The leaked gas treatment unit may include a first gas discharge pipe connected to the container storage cabinet to discharge the gas in the container storage cabinet, a gas flow switcher connected to the first gas discharge pipe to switch a flow direction of the gas, a second gas discharge pipe connected to the gas flow switcher to discharge the gas transferred through the first gas discharge pipe, a third gas discharge pipe separated from the second gas discharge pipe and connected to the gas flow switcher to discharge the gas transferred through the first gas discharge pipe, a leaked gas treater connected to the third gas discharge pipe to neutralize the gas transferred through the first gas discharge pipe and

the third gas discharge pipe, a neutralizing agent storage tank disposed adjacent to the leaked gas treater to store neutralizing agent, a neutralizing agent supply pipe connecting the leaked gas treater and the neutralizing agent storage tank, and a neutralizing agent supply pump disposed on the neutralizing agent supply pipe to supply the neutralizing agent to the leaked gas treater.

The leaked gas treatment unit may further include a gas transfer device disposed on the first gas discharge pipe to draw and transfer the gas in the container storage cabinet.

The leaked gas treatment unit may further include a first gas transfer device disposed on the second gas discharge pipe to control transfer of the gas through the first gas discharge pipe and the second gas discharge pipe, and a second gas transfer device disposed on the third gas discharge pipe to control transfer of the gas through the first gas discharge pipe and the third gas discharge pipe.

The leaked gas detection unit may be connected to the gas flow switcher, the first gas transfer device, the second gas transfer device, and the neutralizing agent supply pump by wire or wirelessly to communicate therewith, and the leaked gas detection unit may provide a leaked gas detection signal to the gas flow switcher, the first gas transfer device, the second gas transfer device, and the neutralizing agent supply pump when the leaked gas is detected.

The gas supply system may further include a system controller connected to the leaked gas detection unit and the leaked gas treatment unit to control operations of the leaked gas detection unit and the leaked gas treatment unit. The system controller may be connected to the leaked gas detection unit, the gas flow switcher, the first gas transfer device, the second gas transfer device, and the neutralizing agent supply pump by wire or wirelessly to communicate therewith, the leaked gas detection unit may provide a leaked gas detection signal to the system controller when the leaked gas is detected, and the system controller may control operations of the gas flow switcher, the first gas transfer device, the second gas transfer device, and the neutralizing agent supply pump according to the leaked gas detection signal.

An operating speed of the first gas transfer device and an operating speed of the second gas transfer device may be set to satisfy Operating Condition 1 and Operating Condition 2 below.

Operating Condition 1: First transfer time ≥ Leaked gas detection time  Operating Condition 1:

Operating Condition 2: First transfer time + Second transfer time ≥ Leaked gas detection time + Neutralizing agent supply pump operation time (Leaked gas treater operation time)  Operating Condition 2:

(The first transfer time represents a time period during which the leaked gas is transferred through the first gas discharge pipe at the operating speed of the first gas transfer device, the second transfer time represents a time period during which the leaked gas is transferred through the first gas discharge pipe and the third gas discharge pipe at the operating speed of the second gas transfer device, the leaked gas detection time represents a time period required for the leaked gas detection unit to detect the leaked gas, and the neutralizing agent supply pump operation time represents a time period from when the leaked gas is detected and an operation of the neutralizing agent supply pump starts to when the neutralizing agent starts to be supplied to the leaked gas treater).

## Advantageous Effects

The gas supply system according to the embodiments of the present invention has good performance. For example, even when the leakage pressure of the gas is low, the leaked gas can be detected and safely and effectively removed. When there is no gas leakage, the leaked gas treatment facility does not operate and neutralizing agent is not used, thereby reducing process costs, and when there is a gas leakage, the leaked gas treatment facility is operated such that the leaked gas is effectively treated and removed without being discharged into the atmosphere. Furthermore, it is possible to secure the safety of workers against the leaked gas while reducing the installation cost of gas detectors in an indoor workplace.

## Description of Drawings

FIG. 1 schematically illustrates a configuration of a gas supply system according to an embodiment of the present invention.

FIGS. 2 to 5 illustrate a gas supply unit according to an embodiment of the present invention and an operation example thereof.

FIG. 6 schematically illustrates a configuration of a gas supply system according to another embodiment of the present

invention.

**Best Mode**

Hereinafter, a detailed description will be given of the present invention with reference to the following embodiments. The purposes, features, and advantages of the present invention will be easily understood through the following embodiments. The present invention is not limited to such embodiments, but may be modified in other forms. The embodiments to be described below are nothing but the ones provided to bring the disclosure of the present invention to perfection and assist those skilled in the art to completely understand the present invention. Therefore, the following embodiments are not to be construed as limiting the present invention.

Although the terms first, second, etc. may be used herein to describe various elements, these elements should not be limited by these terms. These terms are merely used to distinguish one element from another. In addition, the sizes of elements or the relative sizes between elements in the drawings may be somewhat exaggerated for a clearer understanding of the present invention.

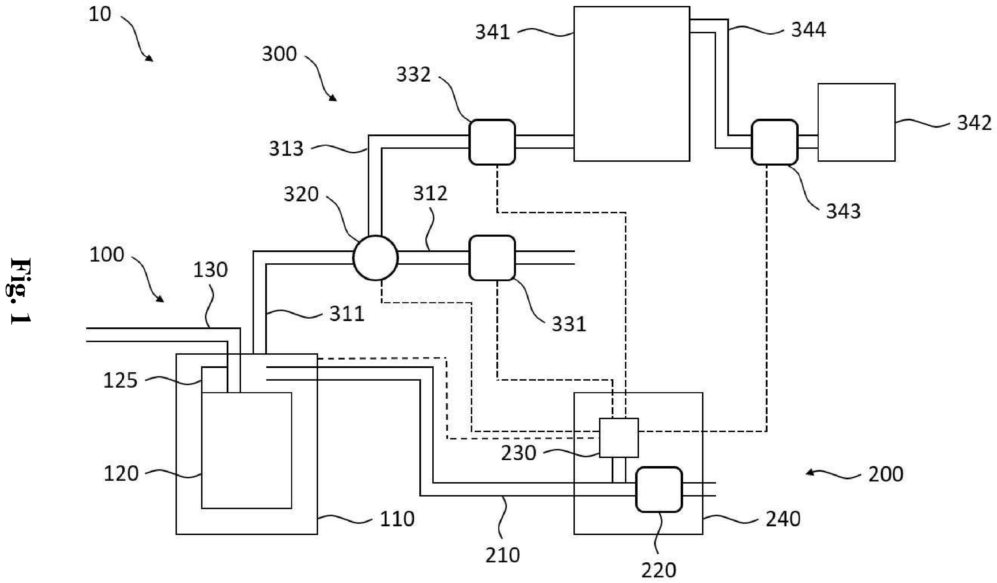

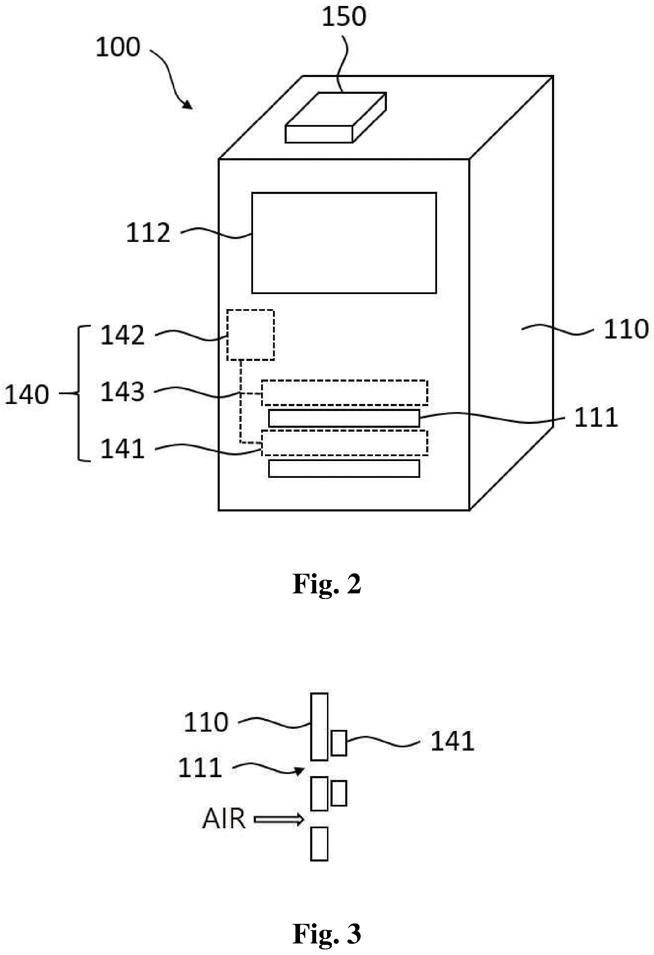

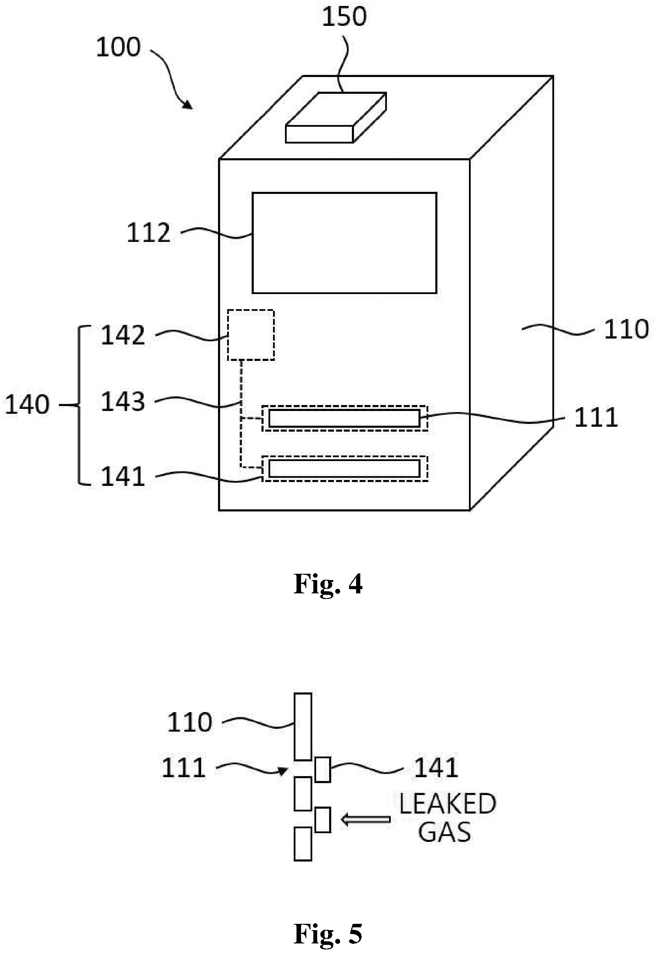

FIG. 1 schematically illustrates a configuration of a gas supply system according to an embodiment of the present invention, and FIGS. 2 to 5 illustrate a gas supply unit according to an embodiment of the present invention and an operation example thereof.

Referring to FIGS. 1 to 5, the gas supply system 10 may include a gas supply unit 100, a leaked gas detection unit 200, and a leaked gas treatment unit 300.

The gas supply unit 100 may include a container storage cabinet 110, a gas storage container 120, an ultrasonic detector 125, a gas supply pipe 130, a through-hole opening and closing unit 140, and a pressure detector 150. The gas supply unit 100 supplies a high-pressure process gas to a production facility at an industrial site for manufacturing a semiconductor device, a display device, or the like. The process gas may include, for example, phosphine, silane, or the like.

The container storage cabinet 110 has a cabinet shape, and accommodates and stores the gas storage container 120. The container storage cabinet 110 may accommodate two or more gas storage containers 120. The container storage cabinet 110 has a through-hole 111 and a storage cabinet window 112. The through-hole 111 is disposed at a lower portion of the container storage cabinet 110 to allow an inside and an outside of the container storage cabinet 110 to be in fluid communication with each other. The through-hole 111 may extend in a direction parallel to the ground, and one or a plurality of through-holes 111 may be disposed. The storage cabinet window 112 is disposed at an upper portion of the container storage cabinet 110 to allow the inside of the container storage cabinet 110 to be viewed. The storage cabinet window 112 may be formed of glass or plastic.

The gas storage container 120 may be a gas cylinder, and is configured to store the process gas supplied to the production facility. Two or more gas storage containers 120 may be disposed and used alternately, thereby stably supplying the process gas to the production facility.

The ultrasonic detector 125 is disposed in the container storage cabinet 110 to detect a gas leak. The ultrasonic detector 125 detects a leak sound (e.g., ultrasonic frequency) of the gas, thereby detecting the gas leakage. Since the gas has a high probability of leaking from a connection portion where the gas storage container 120 and the gas supply pipe 130 are fastened to each other, the ultrasonic detector 125 is preferably disposed at the connection portion between the gas storage container 120 and the gas supply pipe 130.

The ultrasonic detector 125 is connected to the blocking plate driving unit 142 by wire and/or wirelessly to communicate therewith. When the ultrasonic detector 125 detects a leaked gas in the container storage cabinet 110 due to the gas leakage, the ultrasonic detector 125 provides a leaked gas detection signal to the blocking plate driving unit 142. The blocking plate driving unit 142 operates in response to receiving the leaked gas detection signal, and moves the through-hole blocking plate 141 to block the through-hole 111. Since the through-hole 111 is blocked by the through-hole blocking plate 141, the leaked gas is prevented from being discharged to the outside through the through-hole 111. When the leaked gas is removed, the ultrasonic detector 125 provides a leaked gas clearance signal to the blocking plate driving unit 142, and the blocking plate driving unit 142 operates in response to receiving the leaked gas clearance signal and moves the through-hole blocking plate 141 to open the through-hole 111.

When the ultrasonic detector 125 detects a sound pressure equal to or greater than a predetermined level, the ultrasonic detector 125 may cause the blocking plate driving unit 142 to operate to block the through-hole 111, thereby preventing the leaked gas from backflowing to the outside of the container storage cabinet 110. When an amount of leaked gas is small and thus a detected sound pressure is lower than the predetermined level, the probability of backflow is low, and thus the blocking plate driving unit 142 is not operated.

The ultrasonic detector 125 may be connected to the leaked gas treatment unit 300 to directly control the operation of the leaked gas treatment unit 300, or may be connected to the leaked gas detection unit 200 to indirectly control the operation of the leaked gas treatment unit 300 via the leaked gas detection unit 200.

The ultrasonic detector 125 may be connected to the gas flow switcher 320 by wire and/or wirelessly to

communicate therewith. The ultrasonic detector 125 may provide a leaked gas detection signal to the gas flow switcher 320 when detecting gas leaked in the container storage cabinet 110, and the gas flow switcher 320 may switch a gas flow direction from the first gas discharge pipe 311 to the second gas discharge pipe 312 to a gas flow direction from the first gas discharge pipe 311 to the third gas discharge pipe 313 upon receiving the leaked gas detection signal.

The ultrasonic detector 125 may be connected to the first gas transfer device 331 and the second gas transfer device 332 by wire and/or wirelessly to communicate therewith. The ultrasonic detector 125 may provide a leaked gas detection signal to the first gas transfer device 331 and the second gas transfer device 332 when detecting gas leaked in the container storage cabinet 110, and the first gas transfer device 331 may stop its operation, and the second gas transfer device 332 may start its operation to transfer the leaked gas to the leaked gas treater 341 through the third gas discharge pipe 313.

The ultrasonic detector 125 may be connected to the neutralizing agent supply pump 343 by wire and/or wirelessly to communicate therewith. The ultrasonic detector 125 may provide a leaked gas detection signal to the neutralizing agent supply pump 343 when detecting gas leaked in the container storage cabinet 110, and the neutralizing agent supply pump 343 may start its operation to supply neutralizing agent capable of neutralizing the leaked gas to the leaked gas treater 341.

The ultrasonic detector 125 may be connected to the leaked gas detector 230 by wire and/or wirelessly to communicate therewith. The ultrasonic detector 125 may provide a leaked gas detection signal to the leaked gas detector 230 when detecting leaked gas. The leaked gas detector 230 may be connected to the gas flow switcher 320 by wire and/or wirelessly to communicate therewith. The leaked gas detector 230 may provide a leaked gas detection signal to the gas flow switcher 320, and the gas flow switcher 320 may switch a gas flow direction from the first gas discharge pipe 311 to the second gas discharge pipe 312 to a gas flow direction from the first gas discharge pipe 311 to the third gas discharge pipe 313 upon receiving the leaked gas detection signal.

The gas supply pipe 130 connects the gas storage container 120 to a production facility (not shown), and the process gas stored in the gas storage container 120 may flow to the production facility through the gas supply pipe 130.

The through-hole opening and closing unit 140 may include a through-hole blocking plate 141, a blocking plate driving unit 142, and a blocking plate connection unit 143. The through-hole opening and closing unit 140 may be disposed adjacent to the container storage cabinet 110 to open and close the through-hole 111. The through-hole opening and closing unit 140 may be disposed inside or outside the container storage cabinet 110, or may be disposed inside a plate forming the container storage cabinet 110.

The through-hole blocking plate 141 may be disposed adjacent to the through-hole 111 to open and close the through-hole 111. The size of the through-hole blocking plate 141 may be equal to the size of the through-hole 111, but may preferably be larger than that of the through-hole 111 to effectively block the leaked gas.

The blocking plate driving unit 142 may be coupled to the through-hole blocking plate 141 to drive the through-hole blocking plate 141. The blocking plate driving unit 142 may include a motor configured to drive the through-hole blocking plate 141. The through-hole blocking plate 141 may be moved vertically or horizontally by the blocking plate driving unit 142.

The blocking plate driving unit 142 may be connected to the ultrasonic detector 125 and/or the pressure detector 150 by wire and/or wirelessly to communicate therewith. The ultrasonic detector 125 and/or the pressure detector 150 may provide a leaked gas detection signal to the blocking plate driving unit 142 when detecting leaked gas in the container storage cabinet 110. The blocking plate driving unit 142 may operate upon receiving the leaked gas detection signal and move the through-hole blocking plate 141 downward to block the through-hole 111. Since the through-hole 111 is blocked by the through-hole blocking plate 141, leaked gas is not discharged to the outside through the through-hole 111. When the leaked gas is removed, the ultrasonic detector 125 and/or the pressure detector 150 may provide a leaked gas clearance signal to the blocking plate driving unit 142. The blocking plate driving unit 142 may operate upon receiving the leaked gas clearance signal and move the through-hole blocking plate 141 upward to open the through-hole 111.

The blocking plate driving unit 142 may be connected to the leaked gas detector 230 by wire and/or wirelessly to communicate therewith. The leaked gas detector 230 may provide a leaked gas detection signal to the blocking plate driving unit 142 when detecting leaked gas in the container storage cabinet 110. The blocking plate driving unit 142 may operate upon receiving the leaked gas detection signal and move the through-hole blocking plate 141 downward to block the through-hole 111. When the leaked gas is removed and leaked gas is no longer detected, the leaked gas detector 230 may provide a leaked gas clearance signal to the blocking plate driving unit 142. The blocking plate driving unit 142 may operate upon receiving the leaked gas clearance signal and move the through-hole blocking plate 141 upward to open the through-hole 111.

The blocking plate connection unit 143 may couple the through-hole blocking plate 141 and the blocking plate driving unit 142 to each other. The blocking plate connection unit 143 may be moved vertically and/or horizontally by the blocking plate driving unit 142, thereby moving the through-hole blocking plate 141. In addition, the blocking plate connection unit 143 may have a structure in which a plurality of pipes are overlapped, and a length thereof may be extended or retracted by the blocking plate driving unit 142, thereby moving the through-hole blocking plate 141.

Normally, since the first gas transfer device 331 generates a negative pressure in the container storage cabinet 110, air outside the container storage cabinet 110 is drawn through the through-hole 111 and then transferred through the first gas discharge pipe 311 and the second gas discharge pipe 312 to be discharged to the atmosphere. When a gas leaks, since the second gas transfer device 232 generates a negative pressure in the container storage cabinet 110, the leaked gas in the container storage cabinet 110 is transferred through the first gas discharge pipe 211 and the third gas discharge pipe 213 to be discharged to the leaked gas treater 241. The through-hole opening and closing unit 140 may block the through-hole 111 upon the gas leakage, thereby preventing the leaked gas from backflowing to the outside of the container storage cabinet 110 before an operation of the second gas transfer device 232.

The pressure detector 150 may be disposed adjacent to the container storage cabinet 110 to detect the pressure inside the container storage cabinet 110. For example, the pressure detector 150 may include a pressure sensor.

The pressure detector 150 may be connected to the blocking plate driving unit 142 by wire and/or wirelessly to communicate therewith. The pressure detector 150 may provide a leaked gas detection signal to the blocking plate driving unit 142 when detecting a pressure of leaked gas as pressure in the container storage cabinet 110 increases due to the gas leakage. The blocking plate driving unit 142 may operate upon receiving the leaked gas detection signal and move the through-hole blocking plate 141 to block the through-hole 111. Since the through-hole 111 is blocked by the through-hole blocking plate 141, leaked gas is not discharged to the outside through the through-hole 111. When the leaked gas is removed and the pressure decreases, the pressure detector 150 may provide a leaked gas clearance signal to the blocking plate driving unit 142. The blocking plate driving unit 142 may operate upon receiving the leaked gas clearance signal and move the through-hole blocking plate 141 to open the through-hole 111.

The pressure detector 150 is connected to the leaked gas detector 230 by wire and/or wirelessly to communicate therewith. The pressure detector 150 may provide a leaked gas detection signal to the leaked gas detector 230 when detecting leaked gas. The leaked gas detector 230 may be connected to the gas flow switcher 320 by wire and/or wirelessly to communicate therewith. The leaked gas detector 230 may provide a leaked gas detection signal to the gas flow switcher 320, and the gas flow switcher 320 may switch a gas flow direction from the first gas discharge pipe 311 to the second gas discharge pipe 312 to a gas flow direction from the first gas discharge pipe 311 to the third gas discharge pipe 313 upon receiving the leaked gas detection signal.

The pressure detector 150 may be connected to the gas flow switcher 320 by wire and/or wirelessly to communicate therewith. The pressure detector 150 may provide a leaked gas detection signal to the gas flow switcher 320 when detecting gas leaked in the container storage cabinet 110, and the gas flow switcher 320 may switch a gas flow direction from the first gas discharge pipe 311 to the second gas discharge pipe 312 to a gas flow direction from the first gas discharge pipe 311 to the third gas discharge pipe 313 upon receiving the leaked gas detection signal.

The pressure detector 150 may be connected to the first gas transfer device 331 and the second gas transfer device 332 by wire and/or wirelessly to communicate therewith. The pressure detector 150 may provide a leaked gas detection signal to the first gas transfer device 331 and the second gas transfer device 332 when detecting gas leaked in the container storage cabinet 110, and the first gas transfer device 331 may stop its operation, and the second gas transfer device 332 may start its operation to transfer the leaked gas to the leaked gas treater 341 through the third gas discharge pipe 313.

The pressure detector 150 may be connected to the neutralizing agent supply pump 343 by wire and/or wirelessly to communicate therewith. The pressure detector 150 may provide a leaked gas detection signal to the neutralizing agent supply pump 343 when detecting gas leaked in the container storage cabinet 110, and the neutralizing agent supply pump 343 may start its operation to supply neutralizing agent capable of neutralizing the leaked gas to the leaked gas treater 341.

The leaked gas detection unit 200 may be connected to the gas supply unit 100 to detect gas leaked from the gas supply unit 100. The leaked gas detection unit 200 may include a leaked gas detection transfer pipe 210, a leaked gas detection transfer device 220, a leaked gas detector 230, and a detector storage box 240.

The leaked gas detection transfer pipe 210 connects the container storage cabinet 110 and the leaked gas detector 230. Gas leaked from the gas storage container 120 in the container storage cabinet 110 may flow to the leaked gas detector 230 through the leaked gas detection transfer pipe 210. The leaked gas detection transfer pipe 210 may have a tube or pipe shape. In order to effectively detect the leaked gas, one end of the leaked gas detection transfer pipe 210 is preferably disposed adjacent to one end (inlet) of the first gas discharge pipe 311.

The leaked gas detection transfer device 220 may be disposed in the leaked gas detection transfer pipe 210 to draw the gas in the container storage cabinet 110 and transfer the gas to the leaked gas detector 230. The leaked gas detection transfer device 220 may include a gas transfer pump, a fan, a blower, or the like. In order to precisely detect the leaked gas, it is preferable to use the gas transfer pump to continuously transfer the gas in the container storage cabinet 110 through the leaked gas detection transfer pipe 210.

The leaked gas detector 230 is disposed in the detector storage box 240, and is connected to the leaked gas detection transfer pipe 210 to detect the gas transferred from the container storage cabinet 110. The leaked gas detector 230 may include a gas detection sensor or the like, and may detect the leaked gas and a leakage amount (leakage concentration).

The leaked gas detector 230 may be connected to the gas flow switcher 320 by wire and/or wirelessly to communicate therewith. The leaked gas detector 230 may provide a leaked gas detection signal to the gas flow switcher 320 when detecting gas leaked in the container storage cabinet 110, and the gas flow switcher 320 may switch a gas flow direction from the first gas discharge pipe 311 to the second gas discharge pipe 312 to a gas flow direction from the first gas discharge pipe 311 to the third gas discharge pipe 313 upon receiving the leaked gas detection signal.

The leaked gas detector 230 may be connected to the first gas transfer device 331 and the second gas transfer device 332 by wire and/or wirelessly to communicate therewith. The leaked gas detector 230 may provide a leaked gas detection signal to the first gas transfer device 331 and the second gas transfer device 332 when detecting gas leaked in the container storage cabinet 110, and the first gas transfer device 331 may stop its operation, and the second gas transfer device 332 may start its operation to transfer the leaked gas to the leaked gas treater 341 through the third gas discharge pipe 313.

The leaked gas detector 230 is connected to the neutralizing agent supply pump 343 by wire and/or wirelessly to communicate therewith. The leaked gas detector 230 may provide a leaked gas detection signal to the neutralizing agent supply pump 343 when detecting gas leaked in the container storage cabinet 110, and the neutralizing agent supply pump 343 may start its operation to supply neutralizing agent capable of neutralizing the leaked gas to the leaked gas treater 341.

The detector storage box 240 may have a cabinet shape and may accommodate and store the leaked gas detector 230. The detector storage box 240 may accommodate a plurality of leaked gas detectors 230.

Although not shown in the drawings, the leaked gas detection unit 200 may include a plurality of leaked gas detection transfer pipes 210, a plurality of leaked gas detection transfer devices 220, and a plurality of leaked gas detectors 230, and may be connected to a plurality of container storage cabinets 110 to detect leaked gas. In addition, the leaked gas detection transfer pipe 210 may be connected to the leaked gas treater 341. Leaked gas having passed through the leaked gas detection unit 200 may be transferred to the leaked gas treater 341, neutralized, and then discharged to the atmosphere.

The leaked gas treatment unit 300 may be connected to the gas supply unit 100 to treat gas leaked from the gas supply unit 100. The leaked gas treatment unit 300 may include a first gas discharge pipe 311, a second gas discharge pipe 312, a third gas discharge pipe 313, a gas flow switcher 320, a first gas transfer device 331, a second gas transfer device 332, a leaked gas treater 341, a neutralizing agent storage tank 342, a neutralizing agent supply pump 343, and a neutralizing agent supply pipe 344.

The first gas discharge pipe 311 may be connected to the container storage cabinet 110 to discharge the gas in the container storage cabinet 110. One end (inlet) of the first gas discharge pipe 311 is connected to the container storage cabinet 110, and the other end (outlet) thereof is connected to the gas flow switcher 320. Under normal conditions, the first gas discharge pipe 311 discharges the air in the container storage cabinet 110. When gas (process gas, high-pressure gas) leaks from the gas supply unit 100, the first gas discharge pipe 311 discharges the leaked gas. The first gas discharge pipe 311 may have a tube or pipe shape. A connection position of the first gas discharge pipe 311 to the container storage cabinet 110 may be determined in consideration of a region having a high probability of gas leakage in the gas supply unit 100, the type of gas stored in the gas storage container 120, arrangement positions of the gas flow switcher and the leaked gas treater, and the like. For example, since there is a high probability of gas leakage at the connection portion between the gas storage container 120 and the gas supply pipe 130, the first gas discharge pipe 311 may be connected to an upper surface of the container storage cabinet 110.

The second gas discharge pipe 312 may be connected to the gas flow switcher 320 to discharge the gas transferred through the first gas discharge pipe 311. One end (inlet) of the second gas discharge pipe 312 is connected to the gas flow switcher 320, and the other end (outlet) thereof may be exposed to the atmosphere or may communicate with the atmosphere. Normally, when the leaked gas is not detected, the second gas discharge pipe 312 discharges the air transferred through the first gas discharge pipe 311 to the atmosphere. When gas leaks from the gas supply unit 100 and the leaked gas is detected, the inlet of the second gas discharge pipe 312 is blocked by the gas flow switcher 320 such that the leaked gas does not flow from the first gas discharge pipe 311 to the second gas discharge pipe 312, and the transfer of the gas through the second gas discharge pipe 312 is blocked such that the leaked gas is not discharged to the atmosphere. The second gas discharge pipe 312 may have a tube or pipe shape.

The third gas discharge pipe 313 may be connected to the gas flow switcher 320 to discharge the gas transferred through the first gas discharge pipe 311. One end (inlet) of the third gas discharge pipe 313 is connected to the gas flow switcher 320, and the other end (outlet) thereof is connected to the leaked gas treater 341. Normally, when the leaked gas is not detected, the inlet of the third gas discharge pipe 313 is blocked by the gas flow switcher 320, and thus the transfer of the gas (air) through the third gas discharge pipe 313 is blocked. When gas leaks from the gas supply unit 100 and the leaked gas is detected, the inlet of the second gas discharge pipe 312 is blocked and the inlet of the third gas discharge pipe 313 is opened by the gas flow switcher 320, such that the leaked gas flows from the first gas discharge pipe 311 to the third gas discharge pipe 313 and is discharged to the leaked gas treater 341. The third gas discharge pipe 313 may have a tube or pipe shape.

The gas flow switcher 320 may be disposed between the first gas discharge pipe 311 and the second gas

discharge pipe 312 and between the first gas discharge pipe 311 and the third gas discharge pipe 313 to switch a gas flow. The gas flow switcher 320 opens the inlet of the second gas discharge pipe 312 and blocks the inlet of the third gas discharge pipe 313 to allow the gas to flow from the first gas discharge pipe 311 to the second gas discharge pipe 312, or blocks the inlet of the second gas discharge pipe 312 and opens the inlet of the third gas discharge pipe 313 to allow the gas to flow from the first gas discharge pipe 311 to the third gas discharge pipe 313. The gas flow switcher 320 may include a damper or a 3-way valve capable of adjusting a flow direction and/or a flow rate.

The gas flow switcher 320 may be connected to at least one of the ultrasonic detector 125, the pressure detector 150, and the leaked gas detector 230 by wire and/or wirelessly to communicate therewith. When the ultrasonic detector 125, the pressure detector 150, and/or the leaked gas detector 230 detect leaked gas in the container storage cabinet 110, the ultrasonic detector 125, the pressure detector 150, and/or the leaked gas detector 230 may provide a leaked gas detection signal to the gas flow switcher 320, and when receiving the leaked gas detection signal, the gas flow switcher 320 may block the inlet of the second gas discharge pipe 312 and open the inlet of the third gas discharge pipe 313 to switch a gas flow direction from the first gas discharge pipe 311 to the second gas discharge pipe 312 to a gas flow direction from the first gas discharge pipe 311 to the third gas discharge pipe 313. Thereby, the leaked gas can be prevented from being discharged into the atmosphere.

The first gas transfer device 331 may be disposed in the second gas discharge pipe 312 to control the transfer of gas through the first gas discharge pipe 311 and the second gas discharge pipe 312. An operating speed of the first gas transfer device 331 may be controlled to adjust a transfer speed (discharge speed, control wind speed) of the gas transferred by the first gas transfer device 331. The operating speed of the first gas transfer device 331 may be set to a constant value, and the gas transferred by the first gas transfer device 331 may flow through the first gas discharge pipe 311 and the second gas discharge pipe 312 at a constant speed to be discharged. The operating speed of the first gas transfer device 331 is set to satisfy the regulations of the Occupational Safety and Health Act (control wind speed of 0.5 m/s or more).

The first gas transfer device 331 may include a fan, a blower, a gas transfer pump, or the like. Normally, the first gas transfer device 331 transfers gas (air) in the container storage cabinet 110 through the first gas discharge pipe 311 and the second gas discharge pipe 312 to discharge the gas into the atmosphere. The first gas transfer device 331 may generate negative pressure in the container storage cabinet 110 to prevent gas in the container storage cabinet 110 from flowing backward to the outside of the container storage cabinet 110.

The first gas transfer device 331 may be connected to at least one of the ultrasonic detector 125, the pressure detector 150, and the leaked gas detector 230 by wire and/or wirelessly to communicate therewith. When the ultrasonic detector 125, the pressure detector 150, and/or the leaked gas detector 230 detect leaked gas in the container storage cabinet 110, the ultrasonic detector 125, the pressure detector 150, and/or the leaked gas detector 230 may provide a leaked gas detection signal to the first gas transfer device 331, and when receiving the leaked gas detection signal, the first gas transfer device 331 may stop operating. Thereby, the leaked gas can be prevented from being discharged into the atmosphere.

The second gas transfer device 332 may be disposed in the third gas discharge pipe 313 to control the transfer of gas through the first gas discharge pipe 311 and the third gas discharge pipe 313. An operating speed of the second gas transfer device 332 may be controlled to adjust a transfer speed (discharge speed, control wind speed) of the gas transferred by the second gas transfer device 332. The operating speed of the second gas transfer device 332 may be set to a constant value, and the gas transferred by the second gas transfer device 332 may flow through the first gas discharge pipe 311 and the third gas discharge pipe 313 at a constant speed to be discharged to the leaked gas treater 341. The operating speed of the second gas transfer device 332 is set to satisfy the regulations of the Occupational Safety and Health Act (control wind speed of 0.5 m/s or more).

The second gas transfer device 332 may include a fan, a blower, a gas transfer pump, or the like. The second gas transfer device 332 normally does not operate when leaked gas is not detected, and operates when leaked gas is detected.

The second gas transfer device 332 may be connected to at least one of the ultrasonic detector, the pressure detector 150, and the leaked gas detector 230 by wire and/or wirelessly to communicate therewith. When the ultrasonic detector 125, the pressure detector 150, and/or the leaked gas detector 230 detect leaked gas in the container storage cabinet 110, the ultrasonic detector 125, the pressure detector 150, and/or the leaked gas detector 230 may provide a leaked gas detection signal to the second gas transfer device 332, and when receiving the leaked gas detection signal, the second gas transfer device 332 may start operating to transfer the leaked gas to the leaked gas treater 341 through the first gas discharge pipe 311 and the third gas discharge pipe 313. The second gas transfer device 332 may generate negative pressure in the container storage cabinet 110 to prevent gas in the container storage cabinet 110 from flowing backward to the outside of the container storage cabinet 110.

In the drawings, a total of two gas transfer devices are disposed, such as the first gas transfer device 331 disposed in the second gas discharge pipe 312 and the second gas transfer device 332 disposed in the third gas discharge pipe 313, and the first gas transfer device 331 and the second gas transfer device 332 are respectively operated under normal conditions and upon gas leakage. However, the present invention is not limited thereto, and only one gas transfer

device may be disposed in the first gas discharge pipe 311. In this case, the gas transfer device may always operate regardless of whether gas leaks.

The leaked gas treater 341 may be connected to the third gas discharge pipe 313 to neutralize leaked gas transferred through the first gas discharge pipe 311 and the third gas discharge pipe 313. The leaked gas treater 341 may include a scrubber or the like. The neutralized gas may be discharged to the atmosphere through a discharge pipe (not shown) disposed at an upper portion of the leaked gas treater 341, or may be discharged to the atmosphere after passing through a blower and/or a filter connected to the discharge pipe. The third gas discharge pipe 313 is connected to a lower portion of the leaked gas treater 341 and the neutralizing agent supply pipe 344 is connected to the upper portion of the leaked gas treater 341, and the leaked gas entering the lower portion of the leaked gas treater 341 may react with neutralizing agent supplied to the leaked gas treater 341 to be neutralized. The used neutralizing agent may be discharged from the lower portion of the leaked gas treater 341 to be discarded or recycled.

The neutralizing agent storage tank 342 may be disposed adjacent to the leaked gas treater 341 and may store neutralizing agent for treating leaked gas. The neutralizing agent supply pipe 344 may connect the neutralizing agent storage tank 342 and the leaked gas treater 341 to provide a transfer passage for neutralizing agent. The neutralizing agent supply pump 343 may be disposed in the neutralizing agent supply pipe 344 to transfer the neutralizing agent stored in the neutralizing agent storage tank 342 to the leaked gas treater 341.

The neutralizing agent supply pump 343 may be connected to at least one of the ultrasonic detector 125, the pressure detector 150, and the leaked gas detector 230 by wire and/or wirelessly to communicate therewith. When the ultrasonic detector 125, the pressure detector 150, and/or the leaked gas detector 230 detect leaked gas in the container storage cabinet 110, the ultrasonic detector 125, the pressure detector 150, and/or the leaked gas detector 230 may provide a leaked gas detection signal to the neutralizing agent supply pump 343, and when receiving the leaked gas detection signal, the neutralizing agent supply pump 343 may start operating to supply neutralizing agent capable of neutralizing the leaked gas to the leaked gas treater 341.

The leaked gas treater 341, the neutralizing agent storage tank 342, the neutralizing agent supply pump 343, and the neutralizing agent supply pipe 344 may be integrated into a single scrubber facility and disposed integrally, or may be respectively disposed as separate components separated from each other.

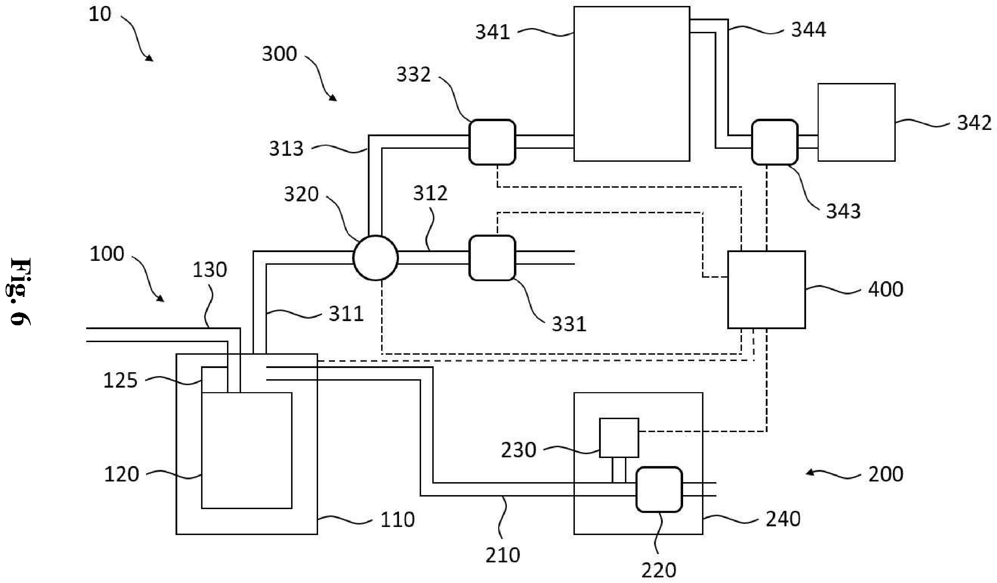

FIG. 6 schematically shows a configuration of a gas supply system according to another embodiment of the present invention.

Referring to FIG. 6, the gas supply system 10 includes a gas supply unit 100, a leaked gas detection unit 200, a leaked gas treatment unit 300, and a system controller 400. Since the gas supply unit 100, the leaked gas detection unit 200, and the leaked gas treatment unit 300 have been described in detail with reference to FIGS. 1 to 5, descriptions thereof will be omitted herein.

The system controller 400 may be connected to the ultrasonic detector 125, the blocking plate driving unit 142, the pressure detector 150, the leaked gas detector 230, the gas flow switcher 320, the first gas transfer device 331, the second gas transfer device 332, and the neutralizing agent supply pump 343 by wire and/or wirelessly to communicate therewith, and may control operations of these components.

When the ultrasonic detector 125, the pressure detector 150, and/or the leaked gas detector 230 detect leaked gas in the container storage cabinet 110, the ultrasonic detector 125, the pressure detector 150, and/or the leaked gas detector 230 may provide a leaked gas detection signal to the system controller 400, and when receiving the leaked gas detection signal, the system controller 400 may control operations of the blocking plate driving unit 142, the gas flow switcher 320, the first gas transfer device 331, the second gas transfer device 332, and the neutralizing agent supply pump 342.

When receiving the leaked gas detection signal, the system controller 400 may control an operation of the blocking plate driving unit 142, and the blocking plate driving unit 142 may move the through-hole blocking plate 141 to block the through-hole 111 according to a control signal of the system controller 400.

When receiving the leaked gas detection signal, the system controller 400 may control an operation of the gas flow switcher 320, and the gas flow switcher 320 may switch a gas flow direction from the first gas discharge pipe 311 to the second gas discharge pipe 312 to a gas flow direction from the first gas discharge pipe 311 to the third gas discharge pipe 313 according to a control signal of the system controller 400.

When receiving the leaked gas detection signal, the system controller 400 may control operations of the first gas transfer device 331 and the second gas transfer device 332, the first gas transfer device 331 may stop operating according to a control signal of the system controller 400, and the second gas transfer device 332 may start operating according to a control signal of the system controller 400 to transfer the leaked gas to the leaked gas treater 341 through the third gas discharge pipe 313.

When receiving the leaked gas detection signal, the system controller 400 may control an operation of the neutralizing agent supply pump 343, and the neutralizing agent supply pump 343 may start operating according to a control signal of the system controller 400 to supply neutralizing agent capable of neutralizing the leaked gas to the leaked gas treater 341.

An operation example of the gas supply system 10 is as follows.

When the ultrasonic detector 125 detects leaked gas in the container storage cabinet 110, the ultrasonic detector 125 may porvide a leaked gas detection signal to the gas flow switcher 320, and when receiving the leaked gas detection signal, the gas flow switcher 320 may switch a gas flow direction from the first gas discharge pipe 311 to the second gas discharge pipe 312 to a gas flow direction from the first gas discharge pipe 311 to the third gas discharge pipe 313. The ultrasonic detector 125 may provide a leaked gas detection signal to the first gas transfer device 331 and the second gas transfer device 332, the first gas transfer device 331 may stop operating, and the second gas transfer device 332 may start operating to transfer the leaked gas to the leaked gas treater 341 through the third gas discharge pipe 313. The ultrasonic detector 125 may provide a leaked gas detection signal to the neutralizing agent supply pump 343, and the neutralizing agent supply pump 343 may start operating to supply neutralizing agent capable of neutralizing the leaked gas to the leaked gas treater 341.

When leaked gas is detected by the leaked gas detector 230 after receiving the leaked gas detection signal from the ultrasonic detector 125, the leaked gas treatment unit 300 continuously operates to treat the leaked gas.

If leaked gas is not detected by the leaked gas detector 230 until a predetermined time elapses after receiving the leaked gas detection signal from the ultrasonic detector 125, the leaked gas detector 230 determines that it is a malfunction of the ultrasonic detector 125. The predetermined time is set to a time equal to or greater than a time required for the leaked gas detector 230 to detect leaked gas when gas actually leaks. The leaked gas detector 230 may provide a leaked gas clearance signal to the gas flow switcher 320, and when receiving the leaked gas clearance signal, the gas flow switcher 320 may switch a gas flow direction from the first gas discharge pipe 311 to the third gas discharge pipe 313 to a gas flow direction from the first gas discharge pipe 311 to the second gas discharge pipe 312. The leaked gas detector 230 may provide a leaked gas clearance signal to the first gas transfer device 331 and the second gas transfer device 332, the second gas transfer device 332 may stop operating, and the first gas transfer device 331 may start operating. The leaked gas detector 230 may provide a leaked gas clearance signal to the neutralizing agent supply pump 343, and the neutralizing agent supply pump 343 may stop operating to stop supplying neutralizing agent to the leaked gas treater 341.

Another operation example of the gas supply system 10 is as follows.

When the ultrasonic detector 125 detects leaked gas in the container storage cabinet 110, the ultrasonic detector 125 may provide a leaked gas detection signal to the leaked gas detector 230. The leaked gas detector 230 may provide a leaked gas detection signal to the gas flow switcher 320, and when receiving the leaked gas detection signal, the gas flow switcher 320 may switch a gas flow direction from the first gas discharge pipe 311 to the second gas discharge pipe 312 to a gas flow direction from the first gas discharge pipe 311 to the third gas discharge pipe 313. The leaked gas detector 230 may provide a leaked gas detection signal to the first gas transfer device 331 and the second gas transfer device 332, the first gas transfer device 331 may stop operating, and the second gas transfer device 332 may start operating to transfer the leaked gas to the leaked gas treater 341 through the third gas discharge pipe 313. The leaked gas detector 230 may provide a leaked gas detection signal to the neutralizing agent supply pump 343, and the neutralizing agent supply pump 343 may start operating to supply neutralizing agent capable of neutralizing the leaked gas to the leaked gas treater 341.

When the leaked gas is detected by the leaked gas detector 230 after receiving the leaked gas detection signal from the ultrasonic detector 125, the leaked gas treatment unit 300 continuously operates to treat the leaked gas.

If leaked gas is not detected by the leaked gas detector 230 until a predetermined time elapses after receiving the leaked gas detection signal from the ultrasonic detector 125, the leaked gas detector 230 determines that it is a malfunction of the ultrasonic detector 125. The predetermined time is set to a time equal to or greater than a time required for the leaked gas detector 230 to detect leaked gas when gas actually leaks. The leaked gas detector 230 may provide a leaked gas clearance signal to the gas flow switcher 320, and when receiving the leaked gas clearance signal, the gas flow switcher 320 may switch a gas flow direction from the first gas discharge pipe 311 to the third gas discharge pipe 313 to a gas flow direction from the first gas discharge pipe 311 to the second gas discharge pipe 312. The leaked gas detector 230 may provide a leaked gas clearance signal to the first gas transfer device 331 and the second gas transfer device 332, the second gas transfer device 332 may stop operating, and the first gas transfer device 331 may start operating. The leaked gas detector 230 may provide a leaked gas clearance signal to the neutralizing agent supply pump 343, and the neutralizing agent supply pump 343 may stop operating to stop supplying neutralizing agent to the leaked gas treater 341.

Still another operation example of the gas supply system 10 is as follows.

When the ultrasonic detector 125 detects leaked gas in the container storage cabinet 110, the ultrasonic detector 125 may provide a leaked gas detection signal to the system controller 400. The system controller 400 may provide a leaked gas detection signal to the gas flow switcher 320, and when receiving the leaked gas detection signal, the gas flow switcher 320 may switch a gas flow direction from the first gas discharge pipe 311 to the second gas discharge pipe 312 to a gas flow direction from the first gas discharge pipe 311 to the third gas discharge pipe 313. The system controller 400 may provide a leaked gas detection signal to the first gas transfer device 331 and the second gas transfer device 332, the first gas transfer device 331 may stop operating, and the second gas transfer device 332 may start operating to transfer the leaked gas to the leaked gas treater 341 through the third gas discharge pipe 313. The system controller 400 may provide a leaked gas detection signal to the neutralizing agent supply pump 343, and the neutralizing agent supply pump 343 may

start operating to supply neutralizing agent capable of neutralizing the leaked gas to the leaked gas treater 341.

When leaked gas is detected by the leaked gas detector 230 after receiving the leaked gas detection signal from the ultrasonic detector 125, the leaked gas treatment unit 300 continuously operates to treat the leaked gas.

If leaked gas is not detected by the leaked gas detector 230 until a predetermined time elapses after receiving the leaked gas detection signal from the ultrasonic detector 125, the system controller 400 determines that it is a malfunction of the ultrasonic detector 125. The predetermined time is set to a time equal to or greater than a time required for the leaked gas detector 230 to detect leaked gas when gas actually leaks. The system controller 400 may provide a leaked gas clearance signal to the gas flow switcher 320, and when receiving the leaked gas clearance signal, the gas flow switcher 320 may switch a gas flow direction from the first gas discharge pipe 311 to the third gas discharge pipe 313 to a gas flow direction from the first gas discharge pipe 311 to the second gas discharge pipe 312. The leaked gas detector 230 may provide a leaked gas clearance signal to the first gas transfer device 331 and the second gas transfer device 332, the second gas transfer device 332 may stop operating, and the first gas transfer device 331 may start operating. The system controller 400 may provide a leaked gas clearance signal to the neutralizing agent supply pump 343, and the neutralizing agent supply pump 343 may stop operating to stop supplying neutralizing agent to the leaked gas treater 341.

Still another operation example of the gas supply system 10 is as follows.

While gas is supplied from the gas supply unit 100 to the production facility, the leaked gas detection unit 200 operates and detects gas leaked from the gas supply unit 100.

When leaked gas is not detected by the leaked gas detection unit 200, only the first gas transfer device 331 operates, and the second gas transfer device 332 and the neutralizing agent supply pump 343 do not operate. The gas flow switcher 320 opens the inlet of the second gas discharge pipe 312 and blocks the inlet of the third gas discharge pipe 313 to allow the first gas discharge pipe 311 and the second gas discharge pipe 312 to communicate with each other. The first gas transfer device 331 transfers gas (air) in the container storage cabinet 110 through the first gas discharge pipe 311 and the second gas discharge pipe 312 to discharge the gas to the atmosphere. The first gas transfer device 331 is operated at a first operating speed, and the gas transferred by the first gas transfer device 331 is transferred at a first transfer speed.

When leaked gas is detected by the ultrasonic detector 125, the pressure detector 150, and/or the leaked gas detection unit 200, the operation of the first gas transfer device 331 is stopped, and the operations of the second gas transfer device 332 and the neutralizing agent supply pump 343 are started. The gas flow switcher 320 blocks the inlet of the second gas discharge pipe 312 and opens the inlet of the third gas discharge pipe 313 to allow the first gas discharge pipe 311 and the third gas discharge pipe 313 to communicate with each other. In order to maintain a negative pressure in the container storage cabinet 110, it is preferable that the operation of the first gas transfer device 331 is stopped after the first gas discharge pipe 311 and the third gas discharge pipe 313 are made to communicate with each other by the gas flow switcher 320 and the operation of the second gas transfer device 332 is started. The second gas transfer device 332 may transfer the leaked gas to the leaked gas treater 341 through the first gas discharge pipe 311 and the third gas discharge pipe 313. The second gas transfer device 332 is operated at a second operating speed, and the gas transferred by the second gas transfer device 332 is transferred at a second transfer speed. In order to stably transfer the leaked gas through the first gas discharge pipe 311 and the third gas discharge pipe 313, it is preferable that the operating speed (first operating speed) of the first gas transfer device 331 is the same as the operating speed (second operating speed) of the second gas transfer device 332, and the first transfer speed and the second transfer speed may be the same. The leaked gas transferred to the leaked gas treater 341 may react with neutralizing agent supplied by the operation of the neutralizing agent supply pump 343 to be neutralized.

In order to prevent gas leaked from the gas storage container 120 from being discharged to the atmosphere through the second gas discharge pipe 312 and to allow the leaked gas to be moved to the leaked gas treater 341 through the third gas discharge pipe 313 and then be neutralized, operating conditions 1 and 2 are set for the first gas transfer device 331, the second gas transfer device 332, and the neutralizing agent supply pump 343 to satisfy the following conditions.

Operating Condition 1: First transfer time ≥ Leaked gas detection time

Operating Condition 2: First transfer time + Second transfer time ≥ Leaked gas detection time + Neutralizing agent supply pump operation time (Leaked gas treater operation time)

The first transfer time represents a time period during which the leaked gas is transferred in the first gas discharge pipe 311 by a first operating speed of the first gas transfer device 331, and the second transfer time represents a time period during which the leaked gas is transferred in the first gas discharge pipe 311 and the third gas discharge pipe 313 by a second operating speed of the second gas transfer device 332. The leaked gas detection time represents the sum of a time period during which the leaked gas is transferred through the leaked gas detection transfer pipe 210 and a time period detected by the leaked gas detector 230, and the neutralizing agent supply pump operation time (leaked gas treater operation time) represents a time period from when leaked gas is detected by the leaked gas detector 230 and the operation of the neutralizing agent supply pump 343 starts to when neutralizing agent starts to be supplied to the leaked gas treater 341.

Since the leaked gas detection time and the neutralizing agent supply pump operation time are fixed values

depending on installed equipment such as the detector and the pump, the operating speeds of the first gas transfer device 331 and the second gas transfer device 332 may be set so as to satisfy Operating Conditions 1 and 2. The operating speeds of the first gas transfer device 331 and the second gas transfer device 332 may be set to constant values within a range satisfying Operating Conditions 1 and 2 before the operation of the gas supply system 10. In addition, the operating speeds of the first gas transfer device 331 and the second gas transfer device 332 may be controlled to be changed within a range satisfying Operating Conditions 1 and 2 during the operation of the gas supply system 10.

According to an embodiment of the present invention, when leaked gas is not detected, the second gas transfer device 332, the leaked gas treater 341, and the neutralizing agent supply pump 343 do not operate, and neutralizing agent is not used, such that process costs can be reduced, and leaked gas can be effectively treated and removed.

Still another operation example of the gas supply system 10 is as follows.

When a small amount of gas continuously leaks from the gas storage container 120 such that a pressure change in the container storage cabinet 110 is small (when the pressure change is less than a preset reference value), the gas supply system 10 operates according to the above-described operation example, but the through-hole opening and closing unit 140 does not block the through-hole 111.

When a large amount of gas instantaneously leaks from the gas storage container 120 such that the pressure change in the container storage cabinet 110 is large (when the pressure change is equal to or greater than the preset reference value), the gas supply system 10 operates according to the above-described operation example, but the pressure detector 150 provides a leaked gas detection signal to the blocking plate driving unit 142, and the blocking plate driving unit 142 moves the through-hole blocking plate 141 to block the through-hole 111, thereby preventing the large amount of leaked gas from flowing backward to the outside of the container storage cabinet 110.

When the leaked gas is removed by the leaked gas treatment unit 300 and the leaked gas in the container storage cabinet 110 is not detected by the pressure detector 150 and/or the leaked gas detector 230, at least one of the pressure detector 150, the leaked gas detector 230, and the system controller 400 provides a leaked gas clearance signal to the blocking plate driving unit 142, and the blocking plate driving unit 142 moves the through-hole blocking plate 142 to open the through-hole 111.

In this way, whether to open or close the through-hole 111 of the container storage cabinet 110 is determined differently according to a leakage amount and a leakage manner of the leaked gas, whereby it is possible to reduce the installation cost of a gas detector in an indoor workplace while ensuring worker safety against the leaked gas.

Specific embodiments of the present invention have been described above. It will be understood by those skilled in the art that the present invention may be implemented in a modified form without departing from the essential characteristics of the present invention. Therefore, the disclosed embodiments should be considered in a descriptive sense rather than a limiting sense. The scope of the present invention is defined by the claims, not by the foregoing description, and all differences within the equivalent scope thereof should be construed as being included in the present invention.

## Industrial Applicability

The gas supply system according to the embodiments of the present invention has good performance. For example, even when the leakage pressure of the gas is low, the leaked gas can be detected and safely and effectively removed. When there is no gas leakage, the leaked gas treatment facility does not operate and neutralizing agent is not used, thereby reducing process costs, and when there is a gas leakage, the leaked gas treatment facility is operated such that the leaked gas is effectively treated and removed without being discharged into the atmosphere. Furthermore, it is possible to secure the safety of workers against the leaked gas while reducing the installation cost of gas detectors in an indoor workplace.

## Claims

**1.** A gas supply system comprising:

a gas supply unit for supplying a gas to a production facility,
wherein the gas supply unit comprises:

a gas storage container storing the gas;
a gas supply pipe connecting the gas storage container and the production facility;
a container storage cabinet accommodating and storing the gas storage container; and
an ultrasonic detector disposed in the container storage cabinet.

2. The gas supply system of claim 1, wherein the ultrasonic detector is disposed at a connection portion between the gas storage container and the gas supply pipe.

3. The gas supply system of claim 1, wherein the container storage cabinet has a through-hole, and
the gas supply unit further comprises a through-hole opening and closing unit disposed adjacent to the container storage cabinet to open and close the through-hole.

4. The gas supply system of claim 3, wherein the through-hole opening and closing unit comprises:

a through-hole blocking plate disposed adjacent to the through-hole to open and close the through-hole;
a blocking plate driving unit connected to the through-hole blocking plate to drive the through-hole blocking plate; and
a blocking plate connection unit connecting the through-hole blocking plate and the blocking plate driving unit.

5. The gas supply system of claim 3, wherein the through-hole opening and closing unit is connected to the ultrasonic detector by wire or wirelessly to communicate therewith, and
the ultrasonic detector controls an operation of the through-hole opening and closing unit.

6. The gas supply system of claim 3, wherein the gas supply unit further comprises a pressure detector disposed adjacent to the container storage cabinet to detect a pressure inside the container storage cabinet.

7. The gas supply system of claim 6, wherein the through-hole opening and closing unit is connected to the pressure detector by wire or wirelessly to communicate therewith, and
the pressure detector controls an operation of the through-hole opening and closing unit.

8. The gas supply system of claim 1, further comprising a leaked gas detection unit connected to the gas supply unit to detect a gas leaked from the gas supply unit,
wherein the leaked gas detection unit comprises:

a leaked gas detector detecting the leaked gas;
a leaked gas detection transfer pipe connecting the container storage cabinet and the leaked gas detector; and
a leaked gas detection transfer device disposed on the leaked gas detection transfer pipe to transfer the leaked gas.

9. The gas supply system of claim 8, further comprising a leaked gas treatment unit connected to the gas supply unit to treat the leaked gas.

10. The gas supply system of claim 9, wherein the leaked gas treatment unit is connected to the ultrasonic detector by wire or wirelessly to communicate therewith, and
the ultrasonic detector controls an operation of the leaked gas treatment unit.

11. The gas supply system of claim 9, wherein the leaked gas treatment unit comprises:

a first gas discharge pipe connected to the container storage cabinet to discharge a gas in the container storage cabinet;
a gas flow switcher connected to the first gas discharge pipe to switch a flow direction of the gas;
a second gas discharge pipe connected to the gas flow switcher to discharge the gas transferred through the first gas discharge pipe;
a third gas discharge pipe separated from the second gas discharge pipe and connected to the gas flow switcher to discharge the gas transferred through the first gas discharge pipe;
a leaked gas treater connected to the third gas discharge pipe to neutralize the gas transferred through the first gas discharge pipe and the third gas discharge pipe;
a neutralizing agent storage tank disposed adjacent to the leaked gas treater to store neutralizing agent;
a neutralizing agent supply pipe connecting the leaked gas treater and the neutralizing agent storage tank; and
a neutralizing agent supply pump disposed on the neutralizing agent supply pipe to supply the neutralizing agent to the leaked gas treater.

12. The gas supply system of claim 11, wherein the leaked gas treatment unit further comprises a gas transfer device

disposed on the first gas discharge pipe to draw and transfer the gas in the container storage cabinet.

**13.** The gas supply system of claim 11, wherein the leaked gas treatment unit further comprises:

a first gas transfer device disposed on the second gas discharge pipe to control transfer of the gas through the first gas discharge pipe and the second gas discharge pipe; and
a second gas transfer device disposed on the third gas discharge pipe to control transfer of the gas through the first gas discharge pipe and the third gas discharge pipe.

**14.** The gas supply system of claim 13, wherein the leaked gas detection unit is connected to the gas flow switcher, the first gas transfer device, the second gas transfer device, and the neutralizing agent supply pump by wire or wirelessly to communicate therewith, and
the leaked gas detection unit provides a leaked gas detection signal to the gas flow switcher, the first gas transfer device, the second gas transfer device, and the neutralizing agent supply pump when the leaked gas is detected.

**15.** The gas supply system of claim 13, further comprising a system controller connected to the leaked gas detection unit and the leaked gas treatment unit to control operations of the leaked gas detection unit and the leaked gas treatment unit,

wherein the system controller is connected to the leaked gas detection unit, the gas flow switcher, the first gas transfer device, the second gas transfer device, and the neutralizing agent supply pump by wire or wirelessly to communicate therewith,
the leaked gas detection unit provides a leaked gas detection signal to the system controller when the leaked gas is detected, and
the system controller controls operations of the gas flow switcher, the first gas transfer device, the second gas transfer device, and the neutralizing agent supply pump according to the leaked gas detection signal.

**16.** The gas supply system of claim 13, wherein an operating speed of the first gas transfer device and an operating speed of the second gas transfer device are set to satisfy Operating Condition 1 and Operating Condition 2 below:

Operating Condition 1: First transfer time ≥ Leaked gas detection time　　Operating Condition 1:

Operating Condition 2: First transfer time + Second transfer time ≥ Leaked gas detection time + Neutralizing agent supply pump operation time (Leaked gas treater operation time)　　Operating Condition 2:

(the first transfer time represents a time period during which the leaked gas is transferred through the first gas discharge pipe at the operating speed of the first gas transfer device, the second transfer time represents a time period during which the leaked gas is transferred through the first gas discharge pipe and the third gas discharge pipe at the operating speed of the second gas transfer device, the leaked gas detection time represents a time period required for the leaked gas detection unit to detect the leaked gas, and the neutralizing agent supply pump operation time represents a time period from when the leaked gas is detected and an operation of the neutralizing agent supply pump starts to when the neutralizing agent starts to be supplied to the leaked gas treater).

342
343
344
341
200
240
220
230
210
331
332
312
313
320
311
300
110
130
100
125
120
10

**Fig. 1**

150
100
112
142
140
143
141
110
111

Fig. 2

110
141
111
AIR

Fig. 3

150
100
112
142
143
140
141
110
111

Fig. 4

110
111
141
LEAKED
GAS

Fig. 5

342
400
200
343
344
240
220
230
341
331
210
332
312
110
311
300
313
320
130
10
100
125
120

Fig. 6

## INTERNATIONAL SEARCH REPORT

International application No.
**PCT/KR2024/018201**

**A. CLASSIFICATION OF SUBJECT MATTER**

**F17C 13/08**(2006.01)i; **F17C 13/02**(2006.01)i; **G01M 3/24**(2006.01)i; **G06Q 50/10**(2012.01)i

According to International Patent Classification (IPC) or to both national classification and IPC

**B. FIELDS SEARCHED**

Minimum documentation searched (classification system followed by classification symbols)

F17C 13/08(2006.01); B01D 53/04(2006.01); B01D 53/75(2006.01); F17C 1/00(2006.01); F17C 13/00(2006.01); F17C 13/02(2006.01); F24F 11/04(2006.01); G01N 29/04(2006.01); H01L 21/02(2006.01); H01L 21/66(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 가스(gas), 누출(leak), 초음파(ultrasonic), 감지(detect), 중화제(neutralizing agent)

**C. DOCUMENTS CONSIDERED TO BE RELEVANT**

| Category* | Citation of document, with indication, where appropriate, of the relevant passages | Relevant to claim No. |
|---|---|---|
| Y | US 2013-0337737 A1 (DEVARNEY et al.) 19 December 2013 (2013-12-19)<br>See paragraphs [0002], [0020]-[0026], [0031] and [0037] and figures 1-4C. | 1-16 |
| Y | KR 10-1987357 B1 (NK CO., LTD.) 30 September 2019 (2019-09-30)<br>See paragraphs [0025] and [0032]-[0041] and figure 1. | 1-16 |
| Y | KR 10-2019-0128951 A (PYEONG HWA ENGINEERING & CONSULTING CO., LTD.) 19 November 2019 (2019-11-19)<br>See paragraphs [0038]-[0048], [0059] and [0071]-[0072] and figures 1-3. | 8-16 |
| A | KR 10-2014-0121313 A (GLOBAL STANDARD TECHNOLOGY CO., LTD.) 15 October 2014 (2014-10-15)<br>See paragraphs [0026]-[0033] and figures 2 and 4. | 1-16 |
| A | KR 10-1722726 B1 (SEJIN GAS TECH CO., LTD.) 03 April 2017 (2017-04-03)<br>See paragraphs [0035]-[0036] and [0041]-[0042] and figure 2. | 1-16 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **28 February 2025** | **28 February 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2024/018201**

| Patent document cited in search report | Publication date (day/month/year) | Patent family member(s) | Publication date (day/month/year) |
|---|---|---|---|
| US 2013-0337737 A1 | 19 December 2013 | None | |
| KR 10-1987357 B1 | 30 September 2019 | CN 110645470 A | 03 January 2020 |
| | | CN 110645470 B | 15 March 2022 |
| KR 10-2019-0128951 A | 19 November 2019 | KR 10-2047131 B1 | 20 November 2019 |
| KR 10-2014-0121313 A | 15 October 2014 | None | |
| KR 10-1722726 B1 | 03 April 2017 | None | |

Form PCT/ISA/210 (patent family annex) (July 2022)